# EUROPEAN PATENT APPLICATION

(11) **EP 1 571 806 A2**
(43) Date of publication of application: **07.09.2005**
(21) Application number: 04018611.6
(22) Date of filing: 05.08.2004
(51) Int. Cl.: H04L 29/12, H04L 12/24, H04L 29/06

(54) **Network management method and network managing server**

(30) Priority: 04.03.2004 JP 2004061172
(71) Applicant: Hitachi, Ltd., Tokyo 100-8010 (JP)
(72) Inventor: Suzuki, Shinsuke, 1-chome Chiyoda-ku Tokyo 100-8220 (JP)
(74) Representative: Strehl Schübel-Hopf & Partner

(57) **Abstract**

Without changing an existing network and terminals, means for preventing improper use of the network is introduced at low costs. An address management server having a topology database of Layer 2 devices (hub, switch, and wireless station in the case of Ethernet) that configure an intranet is used. Within the server, with respect to each Layer 2 device, an address/port number correspondence acquisition means and a packet filtering specification means are stored. The address management server, according to topology information, recursively calls the address/port number correspondence acquisition means of each Layer 2 device from the upstream of the network, thereby obtaining a Layer 2 device accommodating a given Layer 2 address and its port number. By recursively calling the packet filtering specification means from the Layer 2 device in the upstream direction of the network, the Layer 2 device obtained above and its port number are filtered in a Layer device nearest to the terminal.

## Description

### CLAIM OF PRIORITY

The present application claims priority from Japanese application JP 2004-061172 filed on March 4, 2004, the contents of which is hereby incorporated by reference into the application.

### FIELD OF THE INVENTION

The present invention relates to a communication control technique in the Internet, and more particularly to a network management technique.

### BACKGROUND OF THE INVENTION

In an Internet, terminals can automatically acquire IP addresses from networks by protocols such as DHCP and RA (Router Advertisement) to conduct communications. Such Plug and Play function contributes to relieving an Internet administrator of address allocation management.

However, unlimited use of such Plug and Play function in an intranet configuring an enterprise network does not lead to relieving a network administrator of management. This is because the network administrator must prohibit improper network connections to protect business activities on the intranet, it is difficult to prohibit improper network connections in the network in which the Plug and Play function is unlimitedly used.

Various techniques are available to implement Plug and Play while prohibiting improper network connections. These techniques can fall into two major categories: Layer 3 authentication and Layer 2 authentication.

The Layer 3 authentication technique applies authentication when an IP address is allocated by Plug and Play, thereby preventing IP address allocation to an improper terminal. It permits any users to connect to a network. Concrete examples of the Layer 3 authentication technique are DHCP server with authentication, public key IPv6 address, DHCP snooping/IP Source Guard, and MAC address registration compelling DHCP server.

The DHCP server with authentication is a Layer 3 authentication technique that uses an optional function of the DHCP protocol often used particularly in Plug and Play for IPv4 addresses. When a terminal sends an IP address allocation request to a DHCP server by DHCP, terminal information such as a MAC address, a host name, and a user ID is also sent at the same time using an option of the DHCP protocol. The DHCP server can determine whether to allocate an IP address, based on terminal information included in a DHCP protocol message.

The public key IPv6 address technique (refer to patent document 2 and non-patent document 1) is a Layer 3 authentication technique that specializes particularly in the plug and play function for IPv6 addresses. To automatically set an IPv6 address, a terminal must acquire the address from a network, using a link-local address owned by it. The public key IPv6 address technique uses the public key encryption technique when terminals generate the link-local address, thereby preventing terminals not having a correct secret key from generating IPv6 addresses.

DHCP snooping/IP Source Guard of Cisco Co. (refer to non-patent document 2) is a Layer 3 authentication technique that uses a filtering function of an Ethernet switch placed between a DHCP server and terminals. The Ethernet switch placed between the DHCP server and the terminals snoops DHCP protocol messages exchanged between them (DHCP snooping) to learn what IP addresses have been allocated to what lines of its own. In each line of the Ethernet switch, the Ethernet switch filters all communications except communications to an IP address allocated to the line and communications from the IP address (IP Source Guard), thereby rejecting communications from addresses not allocated by the DHCP server.

The MAC address registration compelling DHCP server (refer to patent document 2) is a Layer 3 authentication technique that makes the DHCP server with authentication more secure. According to this technique, a DHCP server is installed which allocates IP addresses to only registered MAC addresses, and whether to allocate an IP address is decided according to a MAC address included in an IP address allocation request from a terminal. For an address allocation request from a MAC address not registered, the DHCP server forcibly displays a user authentication screen of an authentication server in a terminal issuing the allocation request, and if the terminal is authenticated by the authentication server, registers a MAC address of the terminal as an IP address allocation target. This technique manages the allocation of IP addresses by authenticating and compelling the registration of MAC addresses.

In contrast to the above-mentioned Layer 3 authentication technique, the Layer 2 authentication technique does not permit connection to a network unless users provide correct user/password. With this technique, since improper users cannot make even connection to a network, they cannot acquire addresses from the network. Concrete examples of the Layer 2 authentication technique are IEEE 802.1x, authentication VLAN, and PPP.

IEEE 802.1x is a Layer 2 authentication technique that enables user authentication by expanding Ethernet protocols. When a terminal supporting 802.1x sends an Ethernet frame to an Ethernet switch supporting 802.1x, the Ethernet switch sends back a user authentication request to the terminal. Only when the terminal has made a correct authentication response, the Ethernet switch passes communication from the terminal only in a pertinent port as a result of Layer 2 authentication. The technique disclosed in JP-A No. 2002-84306 is different in user authentication protocol from IEEE 802.1x but is the same as it in that authentication is applied at the time of Ethernet connection.

Authentication VLAN of Alcatel Co. (refer to non-patent document 3) is a Layer 2 authentication technique in an Ethernet switch to which IEEE 802.1x is applied. IEEE 802.1x only determines whether connection can be made to a network, according to a user authentication result, while the authentication VLAN can connect a terminal to a different VLAN, according to a user authentication result.

PPP is an internet connection protocol with user authentication, and is often used in dial-up communication, ADSL communication, and the like. A terminal, which is a PPP client, issues a connection request to a PPP server, and if it has been authenticated, an address is allocated and communication is enabled between the PPP client and the PPP server.
[Patent document 1] JP-A No. 2003-51838
[Patent document 2] JP-A No. 2002-232449
[Non-patent document 1] "Cryptographically Generated Addresses (CGA)", IETF draft-ietf-send-cga-04.txt
[Non-patent document 2] "Configuring DHCP Snooping and IP Source Guard",
http://www.cisco.com/univercd/cc/td/doc/product/lan/cat4000/12_1_19/config/dhcp .pdf
[Non-patent document 3] "Authenticated VLANs",
'http://www.ind.alcatel.com/library/techbrief/TB_Authenticated_VLAN.pdf

### SUMMARY OF THE INVENTION

The Layer 3 authentication enables address allocation management by changing only an address allocation server such as a DHCP server. However, it has the drawback that terminals addressed out of intervention of the address allocation server cannot be managed. For example, a situation cannot be prevented in which addresses not allocated to any terminals by the address allocation server are allocated to terminals for use by users having no right to acquire the addresses at their disposal.

The Layer 2 authentication, which does not permit unauthorized users to connect to a network, can prevent the address allocation management failure as described above. However, since the Layer 2 authentication is achieved under the requirement that all terminals and switches support the same Layer 2 authentication technique, it has a problem in terms of initial introduction costs.

None of the authentication techniques can prevent users having network connection authority from mistakenly producing error packets due to network virus infection or wrong operations.

An object of the present invention is to provide a network management method and a network management device that can solve the above-mentioned problems.

The present invention solves the three problems by the following means.

First, the management failure problem of the address allocation server is prevented by filtering improper terminals by Layer 2 addresses (physical layer addresses in the OSI network model, and MAC addresses in the case of Ethernet) specific to individual terminals.

Next, without changing an existing network comprising terminals and switches not having the Layer 2 authentication function, in a switch nearest to a terminal whose network connection is to be prevented, by filtering communication from a Layer 2 address of the terminal, improper network connection is prevented in the physical layer. By performing such filtering by Layer 2 addresses for terminals infected with virus and terminals performing wrong operations, users having network connection authority can be prevented from improperly using the network.

The present invention uses topology information on Layer 2 devices (hub, switch, and wireless station in the case of Ethernet) that configure a certain network, and a server having a means of controlling the Layer 2 devices. By sending a filtering request from the server to the Layer 2 devices, without changing an existing network comprising terminals and switches not having the Layer 2 authentication function, improper network connections are prevented by Layer 2 address filtering.

By performing such filtering by Layer 2 addresses for terminals infected with virus and terminals performing wrong operations, users having network connection authority can be prevented from improperly using the network.

According to the present invention, without changing an existing network and terminals, improper use of the network can be prevented at low costs.

### BRIEF DESCRIPTION OF THE DRAWINGS

FIG. 1 is a block diagram of a network in which the present invention is concerned;
FIG. 2 is a hardware block diagram of an address management server;
FIG. 3 is a software module diagram of an address management server;
FIG. 4 is a drawing showing an example of a Layer 2/3 device list structure of a Layer 2/3 device database;
Fig. 5A is a drawing showing an internal data structure of a subnet information list;
FIG. 5B is a drawing showing an internal data structure of a router list;
FIG. 5C is a drawing showing an internal data structure of a downstream device list;
FIG. 5D is a drawing showing an internal data structure of a downstream device list;
FIG. 5E is a drawing showing an internal data structure of a downstream device list;
FIG. 5F is a drawing showing an internal data structure of a downstream device list;
FIG. 6 is a flowchart of an algorithm for searching for a Layer 2 device accommodating a terminal having a given Layer 2 address in an address management server;
FIG. 7 is a flowchart of an algorithm for filtering a terminal having a given Layer 2 address from a network;
FIG. 8 is a software module diagram of an address management server; and
FIG. 9 is a drawing showing an internal data structure of a downstream device list.

### DETAILED DESCRIPTION OF THE PREFERRED EMBODIMENTS

Hereinafter, embodiments of the present invention will be described in detail with reference to the drawings.

First, a description will be made of the configuration of a network, which is a subject of the present invention. The IP network of an intranet comprises plural subnets 120, 121, and so forth. The subnet 120 includes a router 1 (131) for connecting the subnet 120 to other subnets, and plural Layer 2 devices for accommodating terminals 141 and 143 within the subnet (Layer 2 switch 133, wireless LAN station 135, LAN switch 137, and repeater hub 139). The subnet 121 includes a router 2 (132) for connecting the subnet 121 to other subnets, and plural Layer 2 devices (Layer 2 switch 134, LAN switch 136, switching hub 138, and wireless LAN station 140) for accommodating terminals 142 and 144 within the subnet.

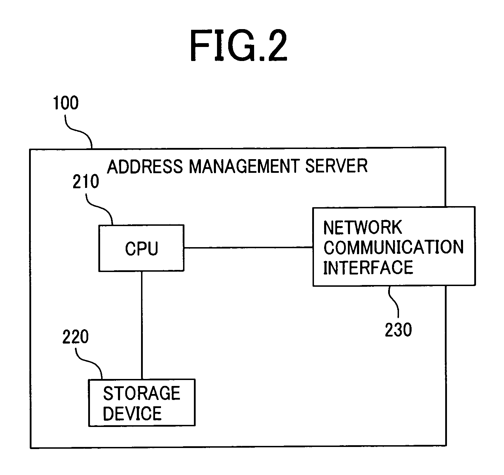

An address management server 100 (network management server), which is a subject of the present invention, has the same configuration as ordinary network servers as shown in FIG. 2. That is, a CPU 210 for executing programs described later uses a storage device 220 for storing databases and programs described later to calculate necessary information and send necessary commands to the Layer 2 devices through a network communication physical interface 230. The address management server 100 may exist anywhere on the network if it can communicate with subnets within the intranet to send commands to the Layer 2 devices through the network.

Here, a network built by Ethernet will be described as an example. For this reason, only MAC addresses are used as physical layer addresses.

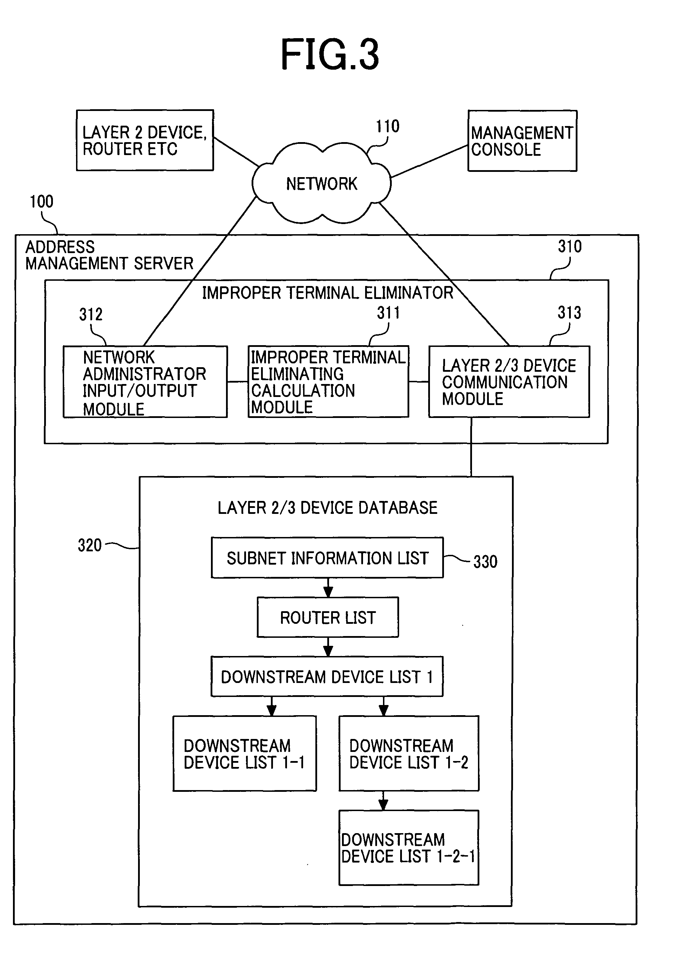

FIG. 3 shows a configuration of software modules inside the address management server 100. An improper terminal eliminator 310 and a Layer 2/3 device database 320 exist in the address management server 100. The two modules will be described below.

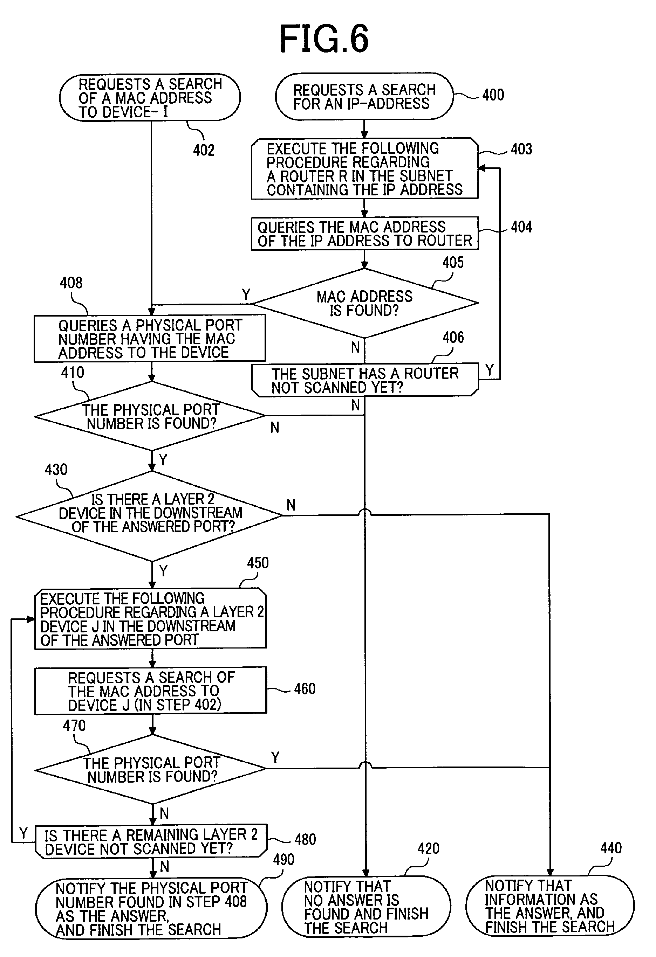

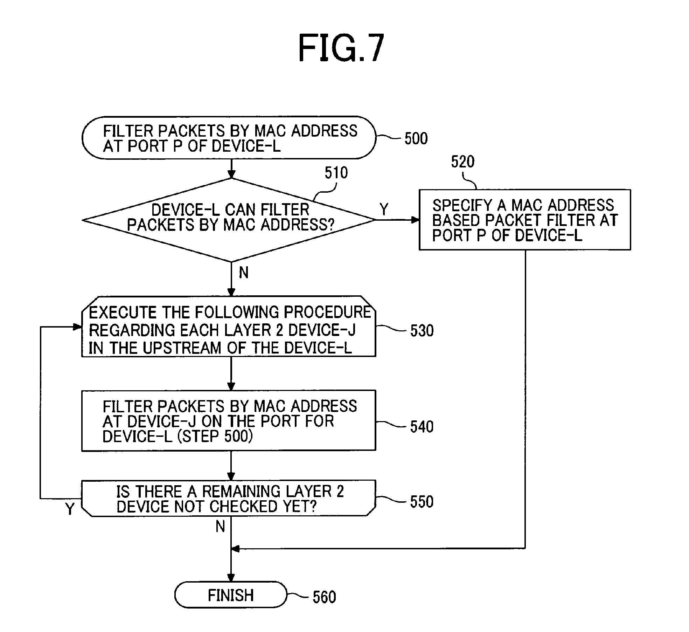

The improper terminal eliminator 310 accepts a terminal elimination request from a management console (network administrator) in a network administrator input-output module 312, and then returns its execution result to the management console (network administrator). Moreover, the improper terminal eliminator 310 lets an improper terminal eliminating calculation module 311 execute algorithms shown in FIGS. 6 and 7 to eliminate a specified terminal from the network. If communications with the Layer 2 device and the router within the subnet are required to execute the algorithms, the improper terminal eliminator 310 refers to the Layer 2/3 device database 320 to decide a communication method, and then conducts communications through a Layer 2/3 device communication module 313.

Next, a description will be made of the structure of the Layer 2/3 device database 320. The Layer 2/3 device database 320 is a database that stores information about Layer 2 devices and routers in all subnets configuring the intranet. Specifically, the Layer 2/3 device database 320 includes a subnet information list 330 that associates IP network addresses of subnets with a router list of the subnets. As shown in the drawing, below a router list is a downstream device list 1, which is a list of devices connected downstream of the routers. Below the downstream device list 1 is a downstream device list 2 and a downstream device list 3, which are lists of devices connected downstream of the devices. Below the downstream device list 3 is a downstream device list 4. Thus, the Layer 2/3 device database 320 has a tree-like hierarchical structure.

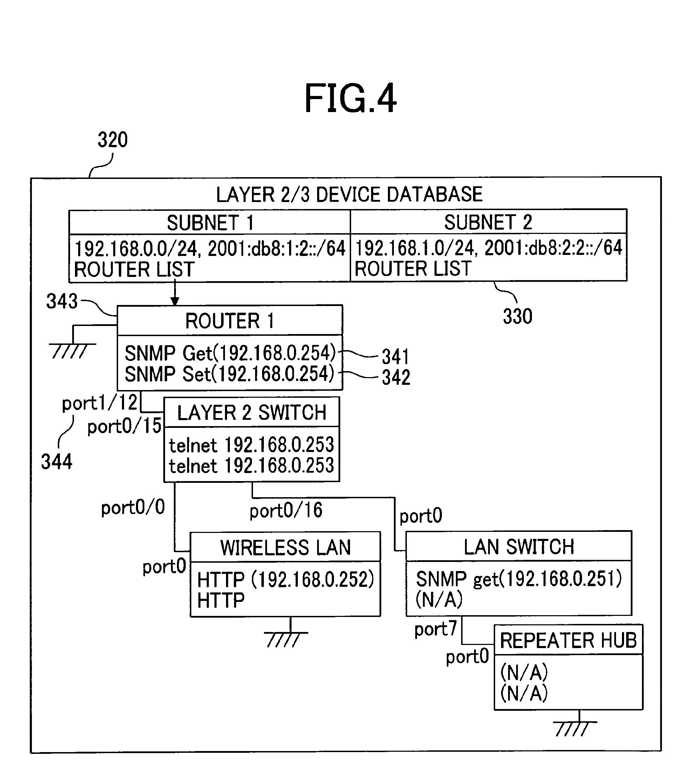

FIG. 4 shows a list structure of Layer 2/3 devices. In FIG. 4, only the subnet 1 is shown in detail.

In the router list, a router is represented by the following four elements: first, an IP address and MAC address/port number correspondence acquisition method (341); second, a packet filtering configuration method by an IP address and a MAC address (342); third, a list of Layer 2 devices existing upstream of the router and their connection port numbers (343); and fourth, a list of Layer 2 devices existing downstream of the router and their connection port numbers (344). Since a router of a subnet exists in the uppermost upstream of the subnet, 343 becomes a blank field.

A Layer 2 device existing downstream of a router is also represented in exactly the same form as the router. If a Layer 2 address/port number correspondence can be acquired from the outside, the IP address and MAC address/port number correspondence acquisition method (341) becomes a black field. Likewise, when a filter of Ethernet frame cannot be specified by a MAC address, the packet filtering configuration method (342) becomes a blank field. Since a Layer 2 device accommodating only a terminal has no Layer 2 device existing downstream of it, a list of Layer 2 devices (344) existing downstream becomes a blank field.

The IP address and MAC address/port number correspondence acquisition method (341) and the packet filtering configuration method (342) are implemented using existing methods supported by each Layer 2 device. For example, scripts for executing commands for setting and acquiring a value of specific MIB by a network management communication protocol such as SNMP and commands specific to devices over a network are contents to be specified in these fields.

It is assumed that the methods 341 and 342 will not become blank fields in routers. This assumption is sufficiently practical because packet filtering functions such as the methods 341 and 342 usually exist in routers installed in an enterprise network.

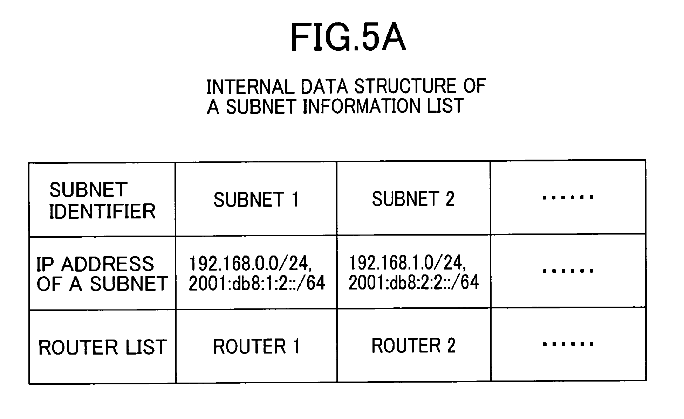

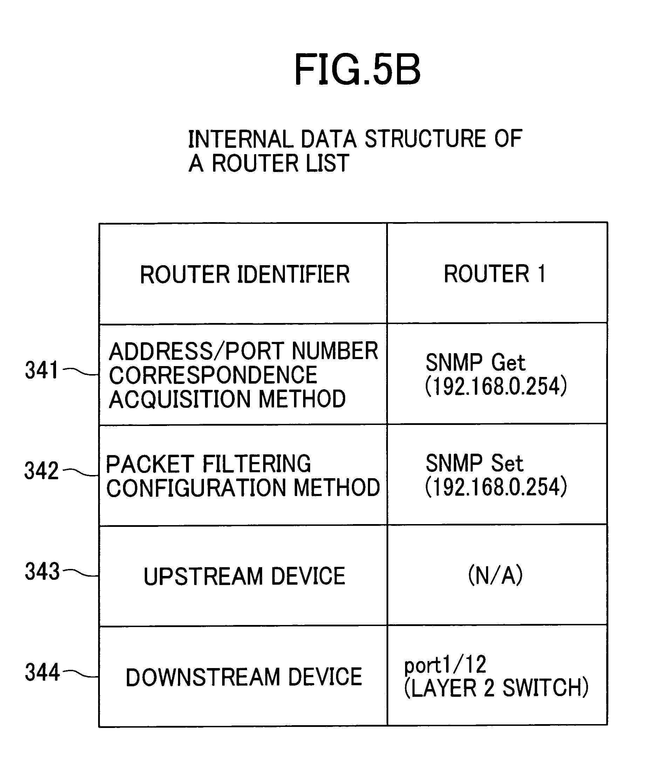

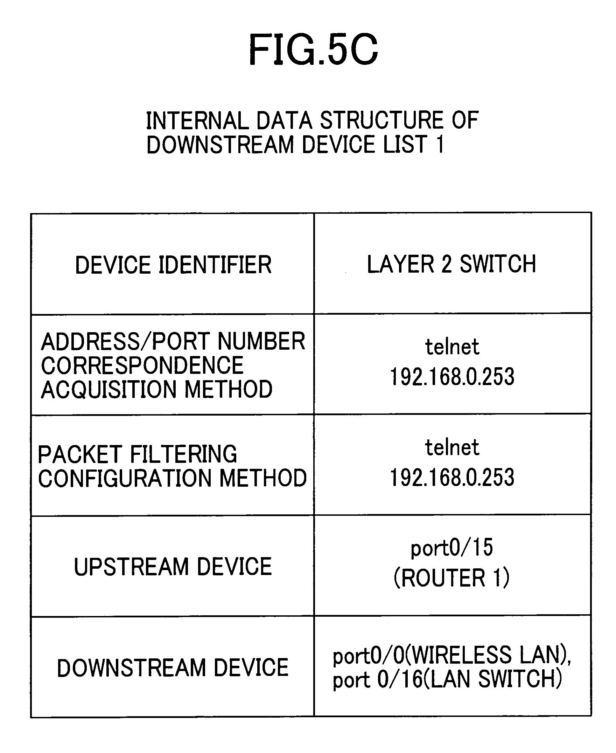

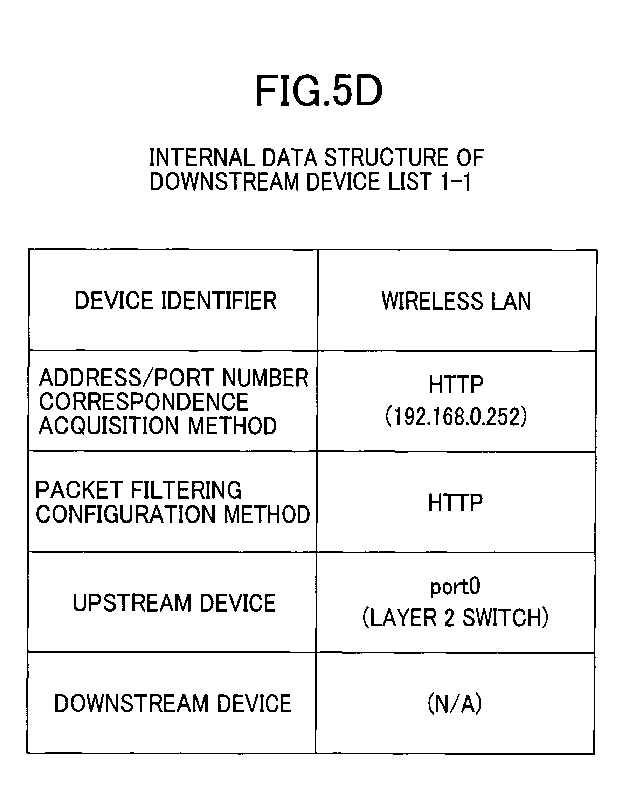

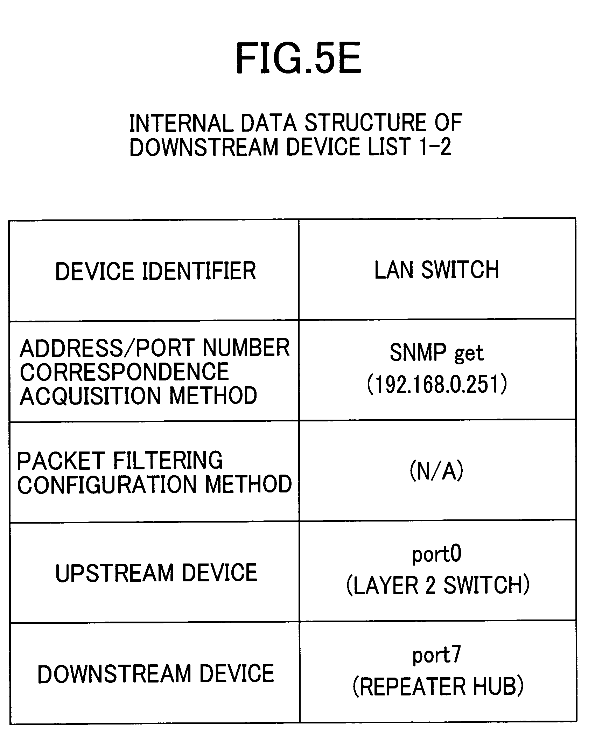

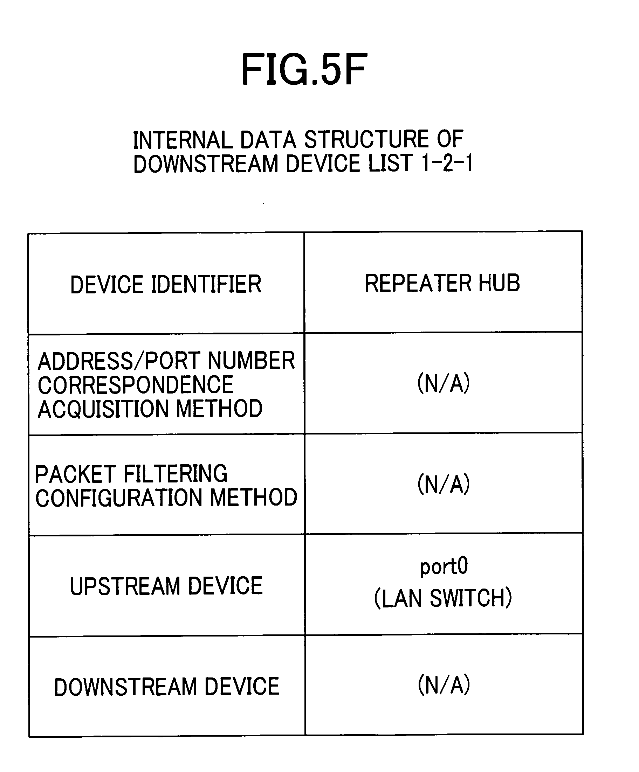

FIGS. 5A to 5F show, in tabular form, internal data structures of a subnet information list, a router list, a downstream device list 1, a downstream device list 1-1, a downstream device list 1-2, and a downstream device list 1-2. FIG. 5A shows an internal data structure of a subnet information list. FIG. 5B shows an internal data structure of a router list corresponding to the router 1 (131) of the subnet 1. FIG. 5C shows an internal data structure of a downstream device list 1 corresponding to the Layer 2 switch (133). FIG. 5D shows an internal data structure of a downstream device list 1-1 corresponding to the wireless LAN (135). FIG. 5E shows an internal data structure of a downstream device list 1-2 corresponding to the LAN switch (137). FIG. 5F shows an internal data structure of a downstream device list 1-2-1 corresponding to the repeater hub (139).

The layer 2/3 device database 320 may be built either manually or dynamically using some protocol.

In a state in which the address management server 100 and the layer 2/3 device database 320 have been set, when the network administrator inputs an IP address to be eliminated from the network to the address management server 100 by using the management console, the address management server 100 first searches for a MAC address corresponding to the IP address. Next, it calculates the port number of a Layer 2 device or a terminal that is nearest to a terminal having the MAC address in terms of network topology. Then, the address management server 100 filters the searched MAC address in the calculated port of the Layer 2 device by the packet filtering configuration method (342). A detailed method of executing the above-mentioned three steps is described below. Since IP addresses in which improper connections are made or improper communications are conducted are detected by analyzing IDS and server access logs by the network administrator, the detection itself is excluded from targets of the present invention.

A method of searching for a corresponding MAC address from an IP address is described below with reference to a flowchart of FIG. 6.

When the network administrator inputs the IP address of a terminal to be eliminated from the network to the improper terminal eliminator 310 (400), the illegal terminal eliminating calculation module 311 compares a network address in the subnet information 330 within the Layer 2/3 device database 320, and the IP address, and gets a list of routers of a corresponding subnet.

For all routers included in the list, the illegal terminal eliminating calculation module 311 uses the router acquisition method 341 shown in the Layer 2/3 device database to acquire a correspondence between the specified IP address and a MAC address/port (step 404). If an answer is obtained, it is the MAC address to be obtained (step 405). If no answer is obtained, the same processing is performed for other routers in the list (step 406). If no answer is obtained for all routers, since the specified IP address does not exist in the subnet, the improper terminal eliminator 310 reports to the network administrator that the corresponding MAC address does not exist, and terminates the processing (step 420).

A description is made of a method of searching for a Layer 2 device accommodating the searched MAC address, and a port number with reference to the same flowchart.

If a MAC address corresponding to the IP address has been obtained in step 405, a port number p accommodating the MAC address is obtained using the method 341 of the router (step 408). Since the same searching has already succeeded in the step 405, the step 408 will not fail. If a port number p has been obtained, the illegal terminal eliminating calculation module 311 checks whether the port number p is included in the downstream device list 344 of the router (step 430). If not included, since the terminal is accommodated directly in the router, the port number p of the router obtained in the step 405 is an answer to be obtained (step 440).

If included, in exactly the same way as the above for all Layer 2 devices concerned, a port number including a MAC address m is calculated, and further a check is made to see if a Layer 2 device exists in the downstream of the calculated port (step 460). The step is repeated. If a Layer 2 device accommodating the terminal is reached, since further searching cannot be performed in the downstream of it, the port number obtained in the Layer 2 device is a port number to be obtained (step 470).

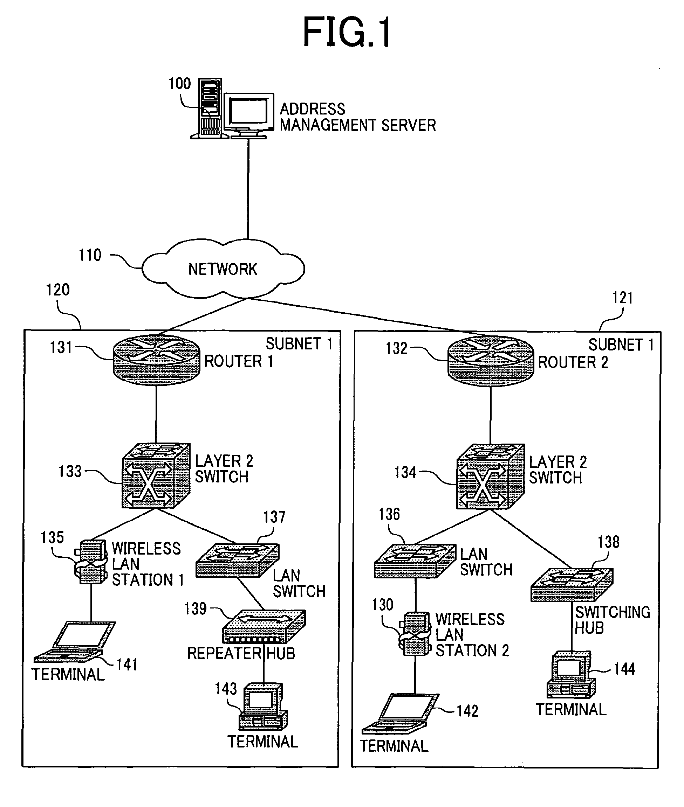

In the event that a Layer 2 device not having the method 341 is encountered midway, since further searching cannot be performed in the downstream of it, the port of a device immediately above the Layer 2 device not having the method 341 that accommodates the Layer 2 device is an answer to be found (step 490). As an example, a description is made of the case where a Layer 2 device accommodating the terminal 143 is searched for when topology information as shown in FIG. 4 is provided in FIG. 1. With respect to a repeater hub (Layer 2 device) actually accommodating the terminal 143, it is impossible to determine in which port its MAC address exists. Therefore, it is to be noted that a port 7 (a port accommodating the repeater hub) of a LAN switch immediately upstream of it is an approximate location to accommodate the terminal 143.

When the Layer 2 device L accommodating the MAC address m and its port number p have been determined by the above processing, a method of eliminating the terminal having the MAC address m from the network will be described with reference to a flowchart of FIG. 7.

The improper terminal eliminator 310 refers to the Layer 2/3 device database 320 to determine whether the Layer 2 device L has the filtering method 342 (step 510). If it exists, it filters the MAC address m in the port p of the Layer 2 device by the method 342 and terminates the processing (step 520).

If the filtering method 342 does not exist, the improper terminal eliminator 310 refers to the Layer 2/3 device database 320 to filter the MAC address m for all devices in the upstream of the Layer 2 device L in ports for the Layer 2 device (step 540). The filtering is recursively performed in the same procedure as the above. The repeated filtering process in the Layer 2 device finally reaches the router of the subnet. Since the router of the subnet has the filtering method 342, the recursive processing converges after a finite number of executions.

As an example, a description is made of the case where the MAC address of the terminal 143 is filtered in the port 7 of a LAN switch when topology information as shown in FIG. 4 is provided in FIG. 1. Since the LAN switch has no filtering method, the MAC address of the terminal 143 is filtered in port 0/16 (port accommodating the LAN switch) of Layer 2 switch upstream of it. Thereby, the terminal to be eliminated from the network can be filtered in a Layer 2 device nearest to the terminal.

As has been described above, according to the present invention, in the address management server, by managing topology information of all Layer 2 devices and a method of acquiring Layer 2 addresses from the Layer 2 devices, and a method of setting a filter for the Layer 2 devices, improper terminals can be disconnected from existing networks without making changes to the existing networks and terminals. As a result, introduction costs can be confined to only the address management server, so that the present invention could provide an inexpensive solution to prevention of improper connections.

Since filtering is performed based on Layer 2 addresses specific to terminals, there will be neither attack by use of addresses out of management of an address allocation server nor address management failure. Since Layer 2 addresses are calculated from IP addresses obtained from IDS and server's access logs, and filtering is performed based on the Layer 2 addresses, cases can be prevented in which users having network connection authority mistakenly attack intranets.

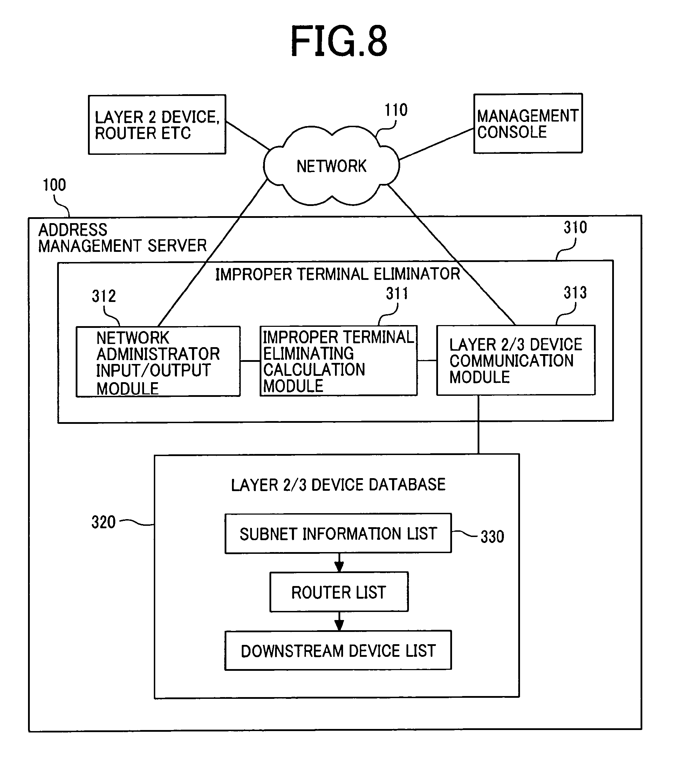

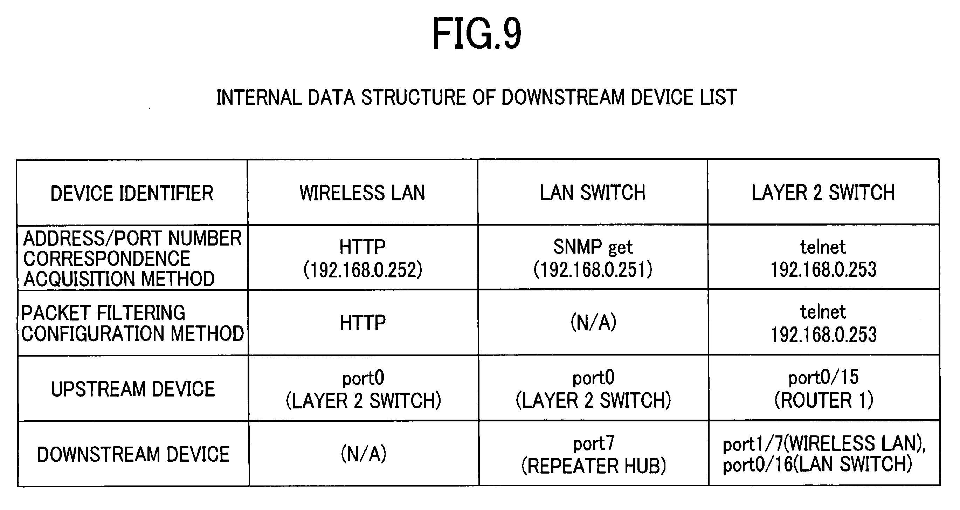

FIG. 8 is a drawing showing another example of the configuration of software modules. FIG. 9 is a drawing showing an internal data structure of the downstream device list in FIG. 8.

If the scale of a subnet is large, it is effective to bring a device list into a hierarchical structure as shown in FIG. 3. However, for small-scale subnets (in-house LAN, etc.), the device list does not necessarily need to be brought into a hierarchical structure because a hierarchical structure of L2 addresses is not so complex. In FIGS. 8 and 9, a downstream device list is not brought into a hierarchical structure.

In the present invention, even within subnets, it is impossible to protect portions downstream of Layer 2 device in which filtering cannot be performed by Layer 2 addresses. However, since it is possible to prevent network attacks from spreading into other portions, the present invention is effective as an improper access prevention solution achieved without making any changes to existing networks.

## Claims

1. A method of managing a network comprising plural subnets in each of which a network connecting device is disposed,
wherein a network management server having a database is connected with the network, the database storing IP network addresses of the subnets and information about the network connecting devices configuring the subnets, and the network management server executes the steps of:
when an IP address is given, referring to the database to compare an IP network address of each subnet and the IP address, and requesting a network connecting device located in the uppermost upstream of a subnet in which the IP address is accommodated to search for a physical address corresponding the IP address; and
requesting the network connecting device of the subnet in which the IP address is accommodated to search for a network connecting device that accommodates and is nearest to the physical address.

2. The method of managing a network according to claim 1,
wherein the step of searching for a network connecting device is performed by successively issuing the request to search for a physical address to downstream network connecting devices.

3. The method of managing a network according to claim 1,
wherein the network management server requests the searched network connecting device to filter communications on the physical address.

4. The method of managing a network according to claim 3,
wherein, when the searched network connecting device does not have a filtering means, the network management server searches for a first network connecting device having a filtering means toward the upstream of the searched network connecting device and requests the first network connecting device to filter communications on the physical address.

5. A network management server, comprising:
a database storing IP network addresses of plural subnets configuring a network and information about network connecting devices configuring the subnets;
IP address input means;
communication means for communicating with network connecting devices configuring the subnets; and
a processing part for executing the steps of: referring to the database to compare an IP network address of each subnet and an IP address given via the IP address input means and requesting a network connecting device located in the uppermost upstream of a subnet in which the IP address is accommodated to search for a physical address corresponding the IP address; and requesting the network connecting device of the subnet in which the IP address is accommodated to search for a network connecting device that accommodates and is nearest to the physical address.

6. The network management server according to claim 5,
wherein information about the network connecting device includes information about an IP address and physical address/port number acquisition means and information about a packet filtering means.

7. The network management server according to claim 6,
wherein the processing program has a function for executing the step of: if the searched network connecting device has the filtering means, requesting the searched network connecting device to filter communications on the physical address, and if the searched network connecting device does not have the filtering means, searching for a first network connecting device having the filtering means toward the upstream of the searched network connecting device and requesting the searched network connecting device to filter communications on the physical address.
